# EUROPEAN PATENT SPECIFICATION

(11) **EP 1 390 247 B1**
(45) Date of publication and mention of the grant of the patent: **02.11.2006**
(21) Application number: 02741508.2
(22) Date of filing: 23.04.2002
(51) Int. Cl.: B62B 3/06, B62B 5/02

(54) **MEANS OF TRANSPORT FOR TRANSPORTING A PRODUCT OVER A STAIRCASE**
BEFÖRDERUNGSMITTEL ZUR BEFÖRDERUNG EINES PRODUKTS ÜBER EINE TREPPE
MOYEN DE TRANSPORT PERMETTANT DE TRANSPORTER UN PRODUIT DANS LES ESCALIERS

(30) Priority: 26.04.2001 NL 1017952
(43) Date of publication of application: 25.02.2004
(73) Proprietor: W.C.M. Van Den Broek Beheer B.V., NL-5427 ED Boekel (NL)
(72) Inventor: VAN DEN BROEK, Wilhelmus, Christianus, Maria, NL-5427 EG Boekel (NL)
(74) Representative: Dorna, Peter
(86) International application number: PCT/NL2002/000261
(87) International publication number: WO 2002/087951

(56) References cited:
- EP-A- 0 287 857
- FR-A- 1 181 688
- FR-A- 2 648 099
- US-A- 380 603
- US-A- 4 421 209
- US-A- 4 632 627

## Description

The invention relates to a means of transport for transporting a product over a staircase, which means of transport comprises a substantially vertical frame, an automatic transport mechanism extending at the bottom side and at the front side of said frame for ascending and/or descending the staircase, and a supporting element for supporting a product, which is connected to the frame at the front side thereof. The transportation of products such as washing machines, refrigerators, large-screen television sets, dryers and the like, whether or not in packaged condition, is a job which cannot be carried out without using aids, or only with great difficulty by several persons working together, and which involves quite a few risks with regard to the safety of the persons involved. In particular for the professional market of movers and deliverers of such products, all kinds of aids by means of which a single person is capable of transporting such products over a staircase are commercially available. Such aids, however, exhibit shortcomings when used on the relatively narrow spiral staircases that are often found in private houses. These shortcomings are connected with the space that must be available when using these aids and the limited amount of space that is available in the case of spiral staircases.

A means of transport as referred to in the introduction is available under the brand name ScalaMobil of the Alber company. Said means of transport is intended for transporting a wheelchair and its user over a staircase. The system is quite unsuitable for transporting, for example, substantially rectangular products such as refrigerators, washing machines and a large-screen television sets.

From US patent No 4,421,209 a means of transport is known which is specifically intended for larger and especially heavier products as mentioned above. To this end, the means of transport comprises two horizontal supporting arms for supporting such products, which supporting arms extend at the front side of a vertical arm and which can be moved along said vertical arm by means of a cable that can be wound up. At the rear side and the lower side of the vertical arm, a mechanism is present for ascending or descending a staircase, as well as two wheels for transport in horizontal direction. Because of the fact that said mechanism is present at the rear side of the vertical arm, and products that are supported by the arms of the means of transport are present at the front side of the vertical arm, it is only possible to position the centre of gravity of the means of transport straight above the wheels, so as to create a slightly stable situation, by holding the means of transport in an extremely inclined position. Such an inclined position is usually impossible on staircases, and in particular on narrow spiral staircases, so that the means of transport is not very suitable for the safe transportation, especially of relatively heavy goods, such as washing machines and television sets, in particular over narrow spiral staircases.

The object of the invention is to provide a means of transport as referred to in the introduction by means of which it is possible to transport relatively heavy products, which are not suitable or fairly unsuitable for being transported over a staircase by persons without using aids, in a safe and physically limited loading way over relatively narrow spiral staircases, and in order to accomplish that objective the invention is characterized in that said means of transport includes moving means for moving the supporting element between a lower position at the front side of the transport mechanism and an upper position at the upper side of the transport mechanism. The lower position allows easy placement of the product in question on the supporting element by one person. In the upper position, in which it suffices within the framework of the invention that only part of the supporting element, and not necessarily the entire supporting element is positioned straight above the transport mechanism, the product in question being supported on the supporting element is positioned closer to the frame and consequently closer to the staircase during the transport of the product over the staircase, as a result of which the amount of space that is required during transport is small and, in addition, a moment equilibrium can be achieved with a limited inclination of the means of transport already and only a limited degree of human interference. Since the transport mechanism, which is preferably accommodated in a housing, likewise extends at the front side of the frame, also the frame can be spaced from the staircase by a minimum distance during transport of the product over the staircase. This renders the means of transport suitable for transporting relatively large, heavy products over narrow spiral staircases, with only one person being needed to do the job. Furthermore, the centre of gravity of the product is positioned closer to the vertical extending through the point of engagement of the transport mechanism to the steps of the staircase, as a result of the movement of the supporting element from the lower position to the upper position, without excessive tilting of the transport mechanism being required. This means a reduction of the tilting moment that acts on the means of transport as a result of the self- weight of the product in question.

A very advantageous and constructionally simple embodiment of the moving means can be obtained if the moving means comprise a four-link mechanism having four pivot points. The four-link mechanism may be in the form of a parallelogram, in which the orientation of the supporting element is the same in the lower position and in the upper position. Alternatively, it is possible to use different lengths for opposing links of the four-link mechanism, as a result of which tilting of the supporting can take place simultaneously with the movement of the supporting element between the lower position and the upper position.

Alternatively, it may be very advantageous for the moving means to comprise a longitudinal guide for a connecting element which is connected to the supporting element. In this way, the number of moving parts can be reduced, as can the constructional space which such moving parts would require.

Furthermore it is very advantageous and constructionally simple if the moving means comprise a winch for winding up a flexible, elongate pulling element connected to the supporting element. Such a pulling element may be a steel cable, for example. The winch can be driven both manually and by separate power means, such as an electric motor.

According to a preferred embodiment, the means of transport is characterized in that the driving means are also suitable for driving the moving means. As a result, there is no need to provide separate driving means for the moving means, so that a compact construction can be obtained.

It is very advantageous if a front edge of the supporting element extends downward in the lower position of the supporting element so as to enable easy placement of a product on the supporting element by one person in said lower position.

A very advantageous transport mechanism comprises a first pair of wheels and a second pair of wheels, which pairs of wheels are capable of movement towards each other and away from each other. Such a mechanism makes it possible to have the means of transport make only a very limited stroke perpendicularly to the plane of the staircase upon ascending or descending a staircase, so that the required amount of space will remain limited. When the means of transport is to ascend or descend a staircase, starting from the situation in which the two pairs of wheels are present on the same step, a first pair of wheels first moves to the next step below or above said step, taking over the supporting function for the means of transport from the second pair of wheels, which subsequently also moves to said next step.

The invention will be explained in more detail hereinafter by means of a description of preferred embodiments of the means of transport according to the invention. In the description, reference will be made to Figures 1 to 3.

Figure 1 is a perspective view of a first preferred embodiment of a means of transport according to the invention.

Figure 2 is a side elevation of a second preferred embodiment of a means of transport according to the invention similar to the first embodiment, in which three positions of the supporting element are shown.

Figure 3 is a side elevation of a third embodiment of a means of transport according to the invention similar to the second embodiment.

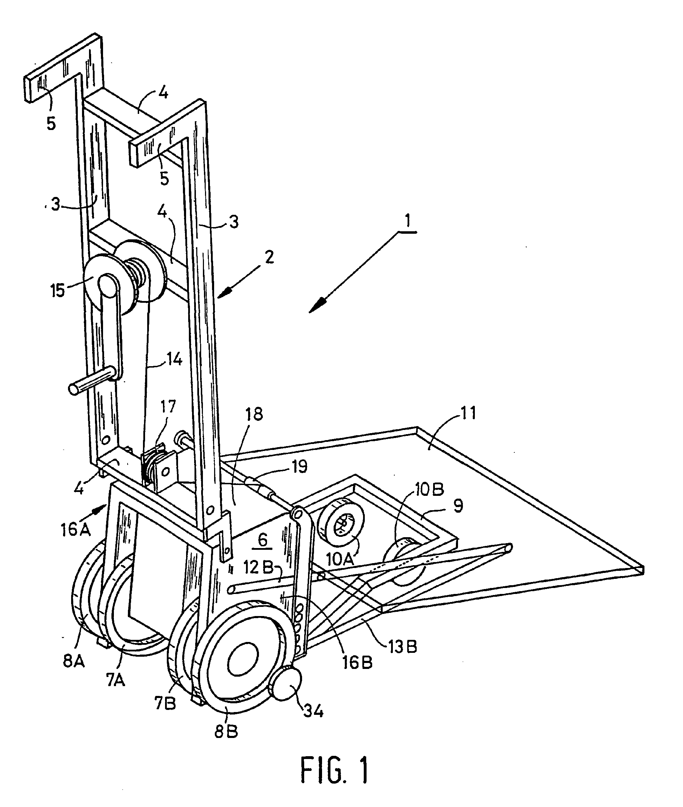

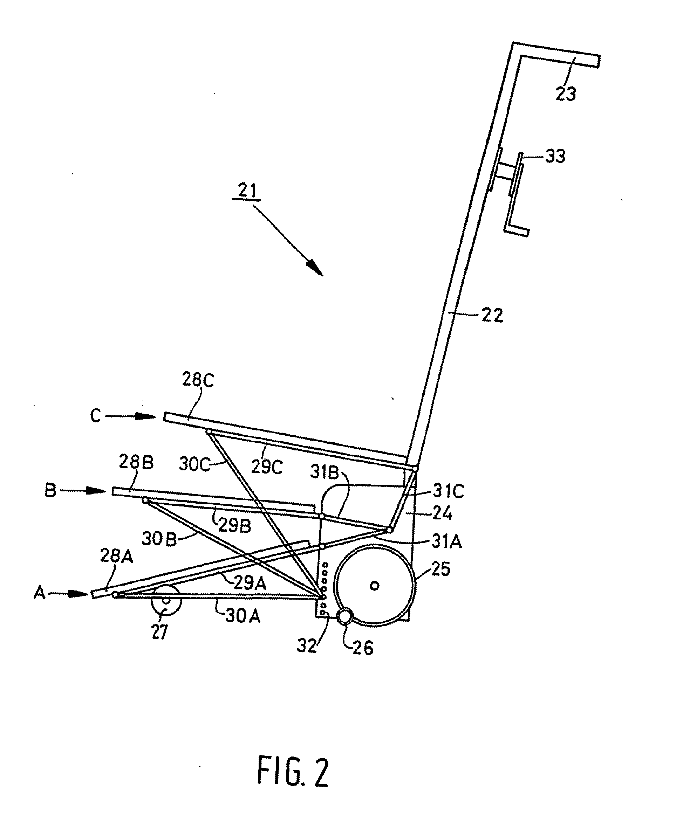

Figure 1 shows a first embodiment of a means of transport 1 according to the invention. The means of transport 1 comprises a substantially vertically extending frame 2, which is built up of two vertical 1 steel strips 3 and a number of horizontal steel strips 4 extending therebetween. Two rearwardly extending handles 5 are provided at the upper side of the frame 2. A housing 6 is attached to the frame 2 at the lower side and the front side of the frame 2. Said housing accommodates a driving system for driving two pairs of wheels, which wheels 7A, 7B and 8A, 8B, respectively, extend on either side of the housing 6. The driving mechanism and the two pairs of wheels enable the means of transport to ascend or descend a staircase, with the two pairs of wheels being capable of movement away from each other and towards each other. The driving mechanism furthermore comprises a trailing wheel for each wheel; the trailing wheel 34 associated with the wheel 8B is shown in Figure 1. The function of the trailing wheels will be briefly explained yet in the description of Figure 2. For a more detailed description of the driving mechanism, reference is made to European patent application EP 0 287 857 A2. It is explicitly noted, however, that the invention is not limited to means of transport that are provided with this specific type of driving mechanism. Also alternative types of driving mechanisms may be used with the means of transport according to the invention. By way of example, reference is made in this connection to the driving mechanism that is disclosed in international 1 patent application WO 99/29554 A1, in which use is made of a lifting mechanism that comprises circulating foot elements.

A horizontal framework 9 fitted with running wheels 10A and 10B at the bottom side, near the front corner points, extends in forward direction from the lower side of the frame 2. At the front side of the vertical frame 2, a supporting platform 11 is provided, on which products such as washing machines, refrigerators and the like can be placed. In the figure, the supporting platform 11 is transparent for the sake of clarity. As will be explained in more detail yet with reference to Figure 2, the supporting platform 11 is movable between a lower position and an upper position. To this end, the supporting platform 11 is supported by 4 links 12A, 12B, 13A, 13B (12A and 13A and not shown), which are pivotally connected to the underside of the supporting platform 11 as well as to two opposing outer sides 16A, 16B of the housing 6. The cable 14, which is passed over a pulley 17 near the lowermost horizontal steel strip 4 and over a rotatable guide bush 19, is connected to the underside of the supporting platform 11 with one end. The opposite end of the cable 14 is wound on a winch 15, which is mounted on a higher horizontal steel strip 4. The supporting platform 11 can be moved between a lower position and an upper position through manual rotation of the winch 15. Alternatively, it is also possible to mount the winch 15 on the upper side 18 of the housing 6, preferably with its axis of rotation extending in vertical direction, with the cable 14 extending horizontally from the winch 15 via suitable guide means. In that case, rotation of the winch 15 can be effected by the driving means that are present within the housing 6, which also drive the wheels 7A, 7B, 8A, 8B.

Figure 2 is a side elevation of a second embodiment of a means of transport 21 according to the invention, which second embodiment is comparable to the first embodiment that is shown in Figure 1. The means of transport 21 comprises a substantially vertical frame 22, at the upper side of which rearwardly extending handles 23 are present. Within the framework of the invention, a different construction and orientation of said handles is also possible, of course. A housing 24 extending in forward direction with respect to the vertical frame 22 is mounted on the frame 22, at the bottom side thereof. The side elevation of Figure 2 shows one wheel 25, which forms part of one of two pairs of wheels similar to the wheels 7A, 7B, 8A, 8B of Figure 1. Furthermore, the figure shows one of the four trailing wheels 26 that are provided, one for each wheel. Said trailing wheels 26 function to block the rotation of the wheel associated therewith in the direction of the trailing wheel 26 in question in the situation where no supporting surface is present for the trailing wheels 26, which situation occurs when the trailing wheels 26 are rolled over the edge of a step. The running wheel 27 is mounted in bearings in a framework (not shown) similar to the framework 9 of Figure 1, which extends from the front side of the housing 24.

The supporting platform 28 is shown in a lower position A, a central position B and an upper position C. In order to distinguish between these three positions, the letters A, B and C will be placed behind the reference numerals in question hereinafter, insofar as applicable, and shown as such in Figure 2. The supporting platform 28 is supported by a link 29. At its end, the link 29 is pivotally connected to the links 30 and 31. The links 30 and 31 are pivotally connected to the housing 24 at their ends remote from the link 29. Various connecting points 32 for the pivoted connection between the link 30 and the housing 24 are provided on the housing 24. The selection of a particular connecting point 32 has an effect on the kinematic model, of course, which is in fact a four-link mechanism, which influences the parts and the orientation of the supporting platform 28 during its movement between the lower position A and the upper position C in a manner which is understandable to those skilled in the art.

The movement of the supporting platform 28 between the lower position A and the upper position C via a central position B is carried out by operating the winch 33, which is rotatably mounted on the vertical frame 22. A cable (not shown), which engages near the pivot point between the links 29 and 31 with its free end, is wound on said winch 33, which winch can be rotated not only manually but also by electric driving means.

As is apparent from Figure 2, the front edge of the supporting platform 28 extends downwardly, as a result of which a washing machine or the like can be moved onto the supporting platform 28 by one person. After the product in question has been placed on the supporting platform 28, said supporting platform is moved to the upper position C by operating the winch 33, during which movement the supporting platform 28 is moved not only upwards but also in the direction of the vertical frame 22. As a result, the amount of space that is taken up by the means of transport 21 and the product in question is minimal, which renders the means of transport 21 excellently suitable for transporting products such as washing machines over a staircase.

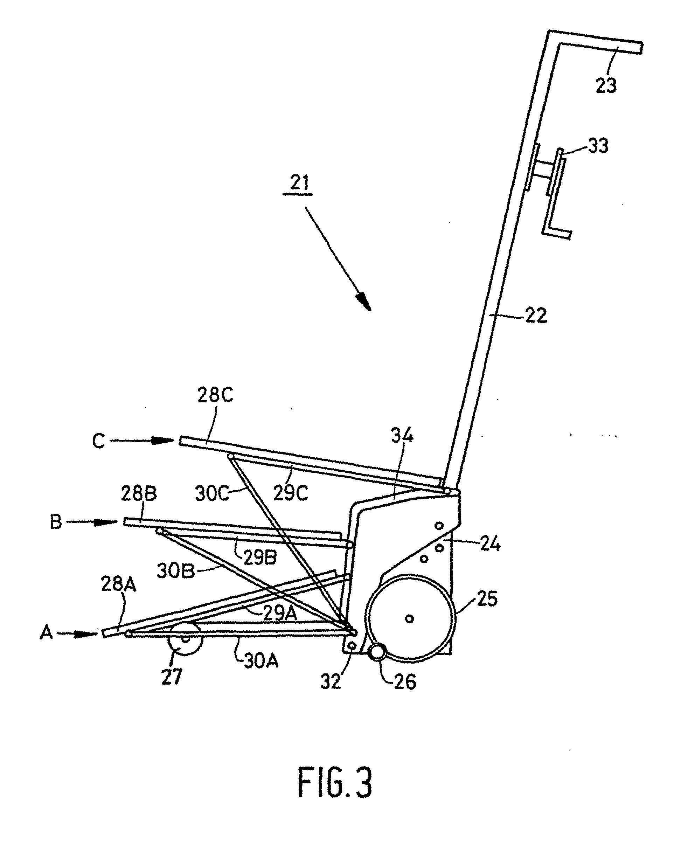

The third preferred embodiment of a means of transport according to the invention as shown in Figure 3 corresponds in large measure to the second preferred embodiment of Figure 2. Consequently, the same reference numerals will be used insofar as possible. The difference between the two embodiments is connected with the mechanical manner in which the movement of the supporting platform 28 is realised. In this embodiment, slotted guides 34 extending on either side of the housing 24 are used instead of the pivoted link 31. The slotted guides 34 follow the contours of the housing 24 at the front side and the upper side thereof more or less. A guide wheel (not shown) is accommodated in each of the two slotted guides 34, which guide wheels are positioned at the ends of the two links 30. When the cable (not shown), which is guided by guide means along a path similar to that of the slotted guides 34 in the lower position A and whose end engages the supporting platform 28 near the edge thereof that faces towards the vertical frame 22, is wound up as a result of the winch 33 being operated, the supporting platform 28 will follow a pattern of movement similar to the pattern of movement as explained in the description of the second preferred embodiment of the invention as shown in Figure 2. It stands to reason that the shape of the slotted guides 34 and the length of the links 30 determine the eventual pattern of movement of the supporting platform 28 to a significant degree.

## Claims

1. A means of transport (1, 21) for transporting a product over a staircase, which means of transport comprises a substantially vertical frame (2, 22), an automatic transport mechanism extending at the bottom side and at the front side of said frame for ascending and/or descending the staircase, and a supporting element (11, 28) for supporting a product, which is connected to the frame at the front side thereof, **characterized in that** said means of transport includes moving means for moving the supporting element between a lower position at the front side of the transport mechanism and an upper position at the upper side of the transport mechanism.

2. A means of transport according to claim 1, **characterized in that** said moving means comprise a four-link mechanism having four pivot points.

3. A means of transport according to claim 1, **characterized in that** said moving means comprise a longitudinal guide for a connecting element which is connected to the supporting element.

4. A means of transport according to claim 1, 2 or 3, **characterized in that** said moving means comprise a winch for winding up a flexible, elongate pulling element connected to the supporting element.

5. A means of transport according to any one of the preceding claims, **characterized in that** said means of transport includes driving means for the common drive of said transport mechanism and said moving means.

6. A means of transport according to any one of the preceding claims, **characterized in that** a front edge of the supporting element extends in downward direction in the lower position of the supporting element.

7. A means of transport according to any one of the preceding claims, **characterized in that** said transport mechanism comprises a first pair of wheels and a second pair of wheels, which pairs of wheels are capable of movement towards each other and away from each other.

## Patentansprüche

1. Transportmittel (1, 21) zum Transportieren eines Produkts über eine Treppe, wobei das Transportmittel einen im Wesentlichen vertikalen Rahmen (2, 22), einen automatischen Transportmechanismus zum Hinauf- und/oder Hinuntergehen der Treppe, welcher sich an der Unterseite und der Vorderseite des Rahmens erstreckt, und ein Stützelement (11, 28) zum Stützen eines Produkts, welches mit dem Rahmen an seiner Vorderseite verbunden ist, umfasst,
**dadurch gekennzeichnet,**
**dass** das Transportmittel Bewegungsmittel zum Bewegen des Stützelements zwischen einer unteren Position an der Vorderseite des Transportmechanismus und einer oberen Position an der Oberseite des Transportmechanismus umfasst.

2. Transportmittel nach Anspruch 1,
**dadurch gekennzeichnet,**
**dass** die Bewegungsmittel einen Mechanismus mit vier Verbindungen mit vier Drehpunkten umfassen.

3. Transportmittel nach Anspruch 1,
**dadurch gekennzeichnet,**
**dass** die Bewegungsmittel eine longitudinale Führung für ein Verbindungselement, welches mit dem Stützelement verbunden ist, umfassen.

4. Transportmittel nach Anspruch 1, 2 oder 3,
**dadurch gekennzeichnet,**
**dass** die Bewegungsmittel eine Winde zum Aufwickeln eines flexiblen, langgestreckten Zugelements, welches mit dem Stützelement verbunden ist, umfassen.

5. Transportmittel nach einem der vorhergehenden Ansprüche,
**dadurch gekennzeichnet,**
**dass** das Transportmittel ein Antriebsmittel für den gemeinsamen Antrieb des Transportmechanismus und der Bewegungsmittel umfasst.

6. Transportmittel nach einem der vorhergehenden Ansprüche,
**dadurch gekennzeichnet,**
**dass** eine vordere Kante des Stützelements sich in der unteren Position des Stützelements in eine Richtung nach unten erstreckt.

7. Transportmittel nach einem der vorhergehenden Ansprüche,
**dadurch gekennzeichnet,**
**dass** der Transportmechanismus ein erstes Räderpaar und ein zweites Räderpaar umfasst, wobei die Räderpaare in der Lage sind, sich aufeinander zu- und voneinander wegzubewegen.

## Revendications

1. Moyen de transport (1, 21) destiné au transport d'un produit dans un escalier, lequel moyen de transport comprend un cadre substantiellement vertical (2, 22), un mécanisme automatique de transport s'étendant sur le côté inférieur et sur le côté avant dudit cadre pour monter et/ou descendre l'escalier, et un élément de support (11, 28) pour supporter un produit, lequel est relié au cadre sur le côté avant de celui-ci, **caractérisé en ce que** ledit moyen de transport comporte un moyen de déplacement pour déplacer l'élément de support entre une position inférieure au niveau du côté avant du mécanisme de transport et une position supérieure au niveau du côté supérieur du mécanisme de transport.

2. Moyen de transport selon la revendication 1, **caractérisé en ce que** ledit moyen de déplacement comprend un mécanisme à quatre tiges présentant quatre points de pivotement.

3. Moyen de transport selon la revendication 1, **caractérisé en ce que** ledit moyen de déplacement comprend un guide longitudinal pour un élément de connexion qui est connecté à l'élément de support.

4. Moyen de transport selon les revendications 1, 2 ou 3, **caractérisé en ce que** ledit moyen de déplacement comprend un treuil pour enrouler un élément de traction flexible, allongé relié à l'élément de support.

5. Moyen de transport selon l'une quelconque des revendications précédentes, **caractérisé en ce que** ledit moyen de transport comprend un moyen d'entraînement pour l'entraînement commun dudit mécanisme de transport et dudit moyen de déplacement.

6. Moyen de transport selon l'une quelconque des revendications précédentes, **caractérisé en ce qu'**un bord avant de l'élément de support s'étend selon la direction descendante dans la position inférieure de l'élément de support.

7. Moyen de transport selon l'une quelconque des revendications précédentes, **caractérisé en ce que** ledit mécanisme de transport comprend une première paire de roues et une seconde paire de roues, lesquelles paires de roues sont capables d'un mouvement de rapprochement l'une vers l'autre et d'éloignement l'une de l'autre.
